# EUROPÄISCHE PATENTANMELDUNG

(11) **EP 2 692 419 A1**
(43) Veröffentlichungstag der Anmeldung: **05.02.2014**
(21) Anmeldenummer: 13178469.6
(22) Anmeldetag: 30.07.2013
(51) Int. Cl.: B01D 63/12

(54) **Membranelement, Membranmodul und Membranverbindung**

(30) Priorität: 31.07.2012 DE 102012213483
(71) Anmelder: Krones AG, 93073 Neutraubling (DE)
(72) Erfinder: Scheu, Dirk, 97073 Neutraubling (DE); Steinhauser, Tobias, 93073 Neutraubling (DE); Zacharias, Jörg, 93073 Neutraubling (DE)
(74) Vertreter: Grünecker, Kinkeldey, Stockmair & Schwanhäusser

(57) **Zusammenfassung**

Die Erfindung stellt ein Membranmodul für eine Umkehrosmoseanlage bereit, das ein erstes Membranelement zum Filtern einer Flüssigkeit und ein zweites Membranelement zum Filtern der Flüssigkeit umfasst, wobei das erste Membranelement an einem Ende mit einem Ende des zweiten Membranelements formschlüssig mit einer zwischen den Enden angeordneten Dichtung verbunden ist.

## Beschreibung

### Gebiet der Erfindung

Die vorliegende Erfindung betrifft ein Membranelement, ein Membran(filtrations)modul und eine Membranverbindung, insbesondere für den Einsatz in einer Umkehrosmoseanlage oder einer Ultrafiltrationsanlage.

### Hintergrund der Erfindung

Membran(filtrations)module finden bei der Filtration von Flüssigkeiten, beispielsweise bei der Wasseraufbereitung in einer Umkehrosmoseanlage, Verwendung. Hierbei werden typischerweise Kunststoffmembrane eingesetzt. Bei der Umkehrosmose wird eine zu filternde Flüssigkeit, beispielsweise aufzubereitendes Wasser, in einem Membran(filtrations)modul unter Druck an einer Oberfläche der semipermeablen Membran entlang geführt, so dass das Permeat oder Filtrat (die gefilterte Flüssigkeit) durch die Membran gelangen und auf der anderen Seite nach Durchgang durch die Membran gesammelt werden kann. Der Filterrückstand, das Konzentrat oder Retentat, verbleibt auf der anderen Seite der Membran und kann dort abgeleitet werden.

Eine weit verbreitete Bauform von Membran(filtrations)modulen umfasst ein zentrales Abzugsrohr, das von einer Membran umgeben wird und über welches das Permeat oder Filtrat aus dem Membran(filtrations)modul geleitet werden kann. Bei der Verwendung als Umkehrosmose werden herkömmlicherweise einzelne Membrane hintereinander in einem Modul über Steckverbindungen und/oder Klebstoffverbindungen miteinander verbunden.

Besonders im Bereich der Getränkeindustrie aber auch Pharmaindustrie sind hohe Hygieneanforderungen für Filtrationsanlagen zu erfüllen. Die im Stand der Technik bekannten Modulanordnungen weisen Probleme hinsichtlich des hygienischen Zustands an den gesteckten/verklebten Verbindungsbereichen, an denen einzelne Membrane miteinander verbunden sind, auf.

Somit ist es eine der vorliegenden Erfindung zugrunde liegende Aufgabe, eine hygienisch zufriedenstellende Membranverbindung bzw. ein Membran(filtrations)modul mit hygienisch miteinander verbundenen oder verbindbaren Membranelementen bereitzustellen.

### Beschreibung der Erfindung

Die vorliegende Erfindung stellt ein Membran(filtrations)modul bereit, wobei das Membran(filtrations)modul umfasst:
ein erstes Membranelement zum Filtern einer Flüssigkeit; und
ein zweites Membranelement zum Filtern der Flüssigkeit;
wobei das erste Membranelement an einem Ende mit einem Ende des zweiten Membranelements formschlüssig mit einer zwischen den Enden angeordneten Dichtung verbunden ist.

Das Membran(filtrations)modul kann für eine Umkehrosmoseanlage oder auch eine Ultrafiltrationsanlage verwendet werden. Die (semipermeablen) Membranelemente können aus Kunststoff und/oder Keramik gebildet sein und Poren mit Porengrößen im Bereich von 0,1 nm bis 1 µm aufweisen.

Die formschlüssige Verbindung wird ohne Klebstoff realisiert. Insbesondere kann es sich bei der Verbindung um eine Schraubverbindung oder eine (aseptische) Flanschverbindung oder Bajonett handeln. Bei Anziehen der Verbindung, beispielsweise der Schraubverbindung, wird das eine Ende des ersten Membranelements mit dem einen Ende des zweiten Membranelements unter Kompression der Dichtung zum dichtenden Abschluss verbunden. Die formschlüssige Verbindung stellt eine hygienische Verbindung dar. Eine zuverlässige dichte und hygienische Verbindung, die insbesondere auch der Norm DIN 11864 genügt, kann somit bereitgestellt werden. Durch die hygienische Verbindung der Membranelemente und indem dadurch mikrobiologische, durch die Konstruktion verursachte, Schwachstellen hinsichtlich nicht reinigbarer Toträume, Ecken und Kanten vermieden werden, kann die Standzeit bis zur nächsten Reinigung gegenüber dem Stand der Technik signifikant verlängert werden. Zudem wird eine gegenüber dem Stand der Technik vereinfachte Montage ermöglicht. Eine Schraubverbindung erlaubt eine zuverlässige, jedoch beispielsweise für den Wartungsfall bzw. Austausch eines defekten Membranelements, lösbare Verbindung der Membranelemente miteinander. Beispielsweise kann ein Membranelement an einem Ende ein Gewinde, etwas ein Außengewinde oder Innengewinde, aufweisen. Ein Membranelement kann an einem Ende ein Innengewinde und an einem anderen Ende ein Außengewinde umfassen.

Die Verbindung der beiden Enden der Membranelemente kann über ein Verbindungstück erfolgen, das Teil des ersten Membranelements oder des zweiten Membranelements oder separat ausgebildet sein kann. Hierbei kann das Verbindungselement für eine Schraubverbindung der Membranelemente ausgelegt sein. Auch kann es eine Bohrung zur Überprüfung der Verbindung aufweisen. Das Verbindungselement kann ein Außengewinde aufweisen, über das zwei Membranelemente, die an miteinander zu verbindenden Enden jeweils mit einem Innengewinde versehen sind, miteinander verbunden werden. Das Verbindungselement kann ein Innengewinde aufweisen, über das zwei Membranelemente, die an miteinander zu verbindenden Enden jeweils mit einem Außengewinde versehen sind, miteinander verbunden werden.

Während prinzipiell in dem erfindungsgemäßen Membran(filtrations)modul jede Art von Dichtung Verwendung finden kann, so sind doch insbesondere eine O-Ring-Dichtung oder auch eine Flachdichtung geeignet.

Gemäß einer Weiterbildung kann das eine Ende des ersten Membranelements und/oder das eine Ende des zweiten Membranelements eine Bohrung zur Überprüfung der Verbindung aufweisen. Die Bohrung dient insbesondere zur optischen Kontrolle der korrekten Montage und des Sitzes der Dichtung (z.B. des O-Rings). Außerdem dient diese Bohrung auch dazu, dass Leckagen angezeigt werden können. Weiterhin kann das erste Membranelement ein erstes Abzugsrohr und das zweite Membranelement ein zweites Abzugsrohr umfassen, wobei das erste und das zweite Abzugsrohr aneinander ausgerichtet sind (so dass ihre Mittelachsen/Symmetrieachsen ohne radialen Versatz aneinandergrenzen) und dem Ausleiten eines Permeats aus dem jeweiligen Membranelement dienen können.

Es wird auch bereitgestellt ein Membranelement für ein Membran(filtrations)modul für eine Umkehrosmoseanlage oder Ultrafiltrationsanlage, wobei das Membranelement ein Ende umfasst, das zur formschließenden Verbindung, insbesondere über eine Schraub- oder Flanschverbindung, mit einem anderen Membranelement ausgebildet ist, wobei das Ende insbesondere ein Gewinde, etwa ein Innengewinde oder ein Außengewinde, umfasst. Das Membranelement kann an einem Ende ein Innengewinde und einem anderen Ende ein Außengewinde umfassen. Zudem kann es an einem Ende oder an beiden Enden eine Bohrung zur Überprüfung der formschließenden Verbindung mit einem anderen Membranelement umfassen

Gemäß einer Weiterbildung kann das Membranelement ein Verbindungselement umfassen, das zu einer formschlüssigen Verbindung, insbesondere einer Schraub- oder Flanschverbindung, mit einem anderen Membranelement ausgebildet ist. Das Verbindungselement kann eine Bohrung zur Überprüfung der Verbindung mit einem anderen Membranelement umfassen.

Auch wird ein Membranelement mit einem schraubbar angebrachten Verschluss und einer zwischen dem Verschluss und einem Ende des Membranelements, an dem der Verschluss schraubbar angebracht ist, vorgesehenen Dichtung bereitgestellt.

Weiterhin wird eine Umkehrosmoseanlage oder eine Ultrafiltrationsanlage mit einem Membran(filtrations)modul gemäß einem der oben beschriebenen Beispiele und/oder mit einem Membranelement gemäß einem der oben beschriebenen Beispiele bereitgestellt.

Im folgenden werden Ausführungsformen einer erfindungsgemäßen Vorrichtung unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht zwei Membranelemente eines Membran(filtrations)moduls gemäß einem Beispiel für die vorliegende Erfindung.
Figur 2 veranschaulicht eine Membranverbindung gemäß einem Beispiel für die vorliegende Erfindung.
Figur 3 veranschaulicht einen Membranverschluss für ein Membranelement/-modul.

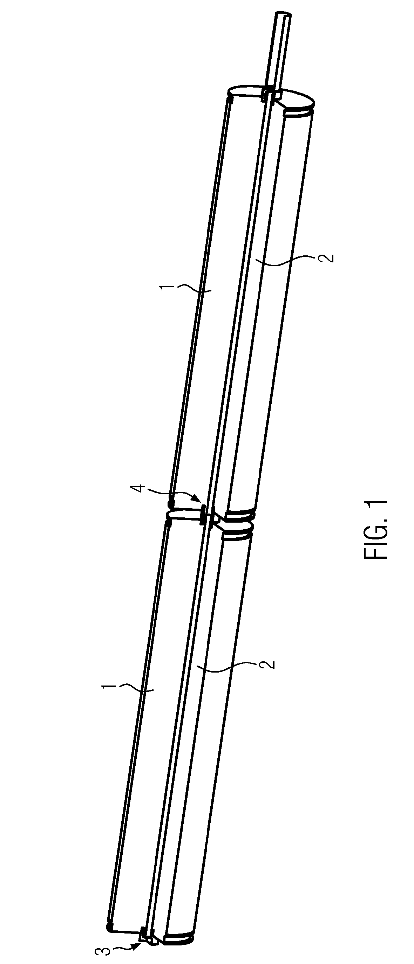

In Figur 1 wird ein Teil eines Membran(filtrations)moduls mit zwei miteinander verbundenen Membranelementen 1 gezeigt. Die Membranelemente 1 können jeweils eine oder mehrere Hohlfaser-, Platten- oder Wickelmembrane umfassen. Als Material für die Membrane kann Kunststoff, beispielsweise Polyethersulfon, Polyamid, Keramik oder auch ein Sintermetall verwendet werden. Mithilfe der Membranelemente 1 kann eine Umkehrosmose-Filtration oder eine Ultrafiltration durchgeführt werden. Bei der zu filternden Flüssigkeit kann es sich um ein Getränk, beispielsweise um Wasser, Trinkwasser, aber auch Pharmawasser, wie beispielsweise WFI (water for injektion), handeln. Jedes Membranelement 1 weist ein Abzugsrohr 2 auf. Das Abzugsrohr 2 kann insbesondere entlang der Längs- oder Symmetrieachse des Membranelements 1 verlaufen. Mit anderen Worten kann das Abzugsrohr 2 ein zentrales Abzugsrohr sein also insbesondere konzentrisch zur Symmetrieachse angeordnet sein. Als Material für das Abzugsrohr 2 kann beispielsweise PSU (Polyethersulfon), PPSU (Polyphenylsulfon) und/oder PVC-C (chloriertes Polyvinylchlorid) verwendet werden. Das Abzugsrohr 2 kann derart ausgebildet sein, dass das Permeat (Filtrat) aus dem Membranelement 1 in das Abzugsrohr 2 leitbar ist.

Am linken Ende des linken Membranelements 1 in der Figur 1 ist ein Verschluss 3 angebracht. Am rechten Ende des rechten Membranelements 1 in der Figur 1 wird das Permeat über den Abfluss des Abzugsrohrs 2 weitergeleitet. Das linke und das rechte Membranelement 1 sind über eine Membranverbindung 4 miteinander verbunden.

Erfindungsgemäß ist diese Verbindung 4 hygienisch, insbesondere entsprechend einer Hygienenorm, ausgebildet. Die Hygienenorm kann beispielsweise der DIN-Norm DIN 11864 entsprechen. Alternativ oder zusätzlich kann die Verbindung auch den Regeln des hygienischen Designs entsprechen, die durch die European Hygienic Engineering and Design Group (EHEDG) festgelegt werden. Die Verbindung 4 kann ein Verbindungselement zum schraubbaren Verbinden der Membranelementel umfassen. Beispielsweise kann die Verbindung 4 einen schraubbaren Flanschanschluss umfassen.

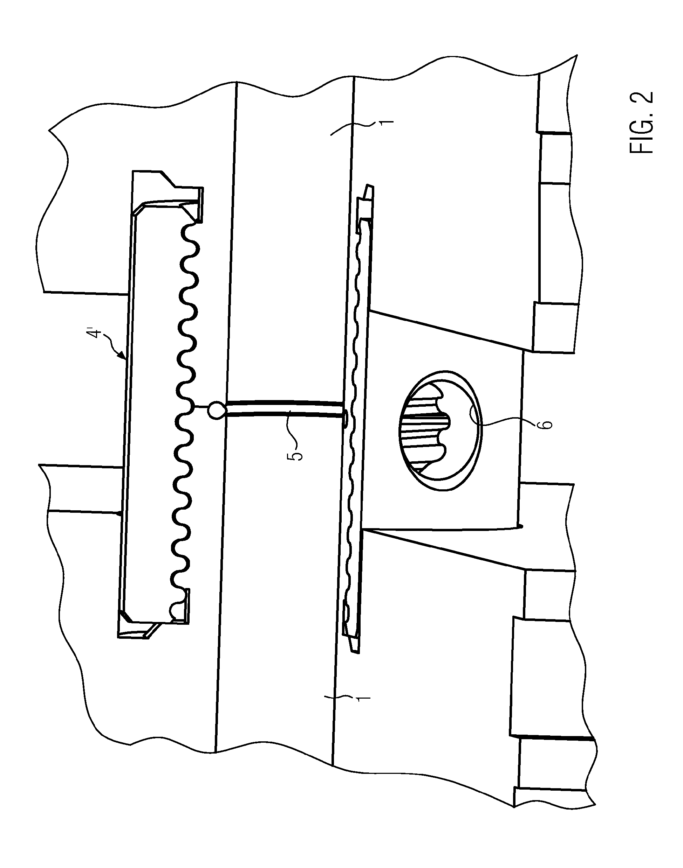

Eine Ausführungsform für die Verbindung 4 der Membranelemente 1 des in Figur 1 gezeigten Membran(filtrations)moduls ist in Figur 2 veranschaulicht. Die beiden in Figur 2 gezeigten Membranelemente 1 sind mit einer Schraubverbindung 4' miteinander verbunden. Ein Verbindungselement mit einem Gewinde verbindet hierbei zwei Enden der Membranelemente 1, die ebenfalls mit je einem Gewinde versehen sind. Mithilfe der Gewinde wird eine formschlüssige Verbindung der Membranelemente 1 erreicht. Zudem wird bei Anziehen der Schraubverbindung eine O-Ring-Dichtung 5 für eine zuverlässig abgedichtete Verbindung zusammengedrückt.

Die Verbindung 4 weist eine Bohrung 6 auf, mit deren Hilfe die korrekte Verbindung der Membranelemente 1 überprüft werden kann.

Das in den Figuren 1 und 2 gezeigte Beispiel verdeutlicht anhand von zwei Membranmodulen die vorliegende Erfindung. Dennoch können auch bei einem Modul alleine hygienische Anschlüsse vorliegen. Insbesondere werden Modulschaltungen von 5 bis zu 10 Modulen in Reihe industriell eingesetzt. Natürlich sind auch hier die Abschluss- und Verbindungselement entsprechend dieser Erfindung ausführbar.

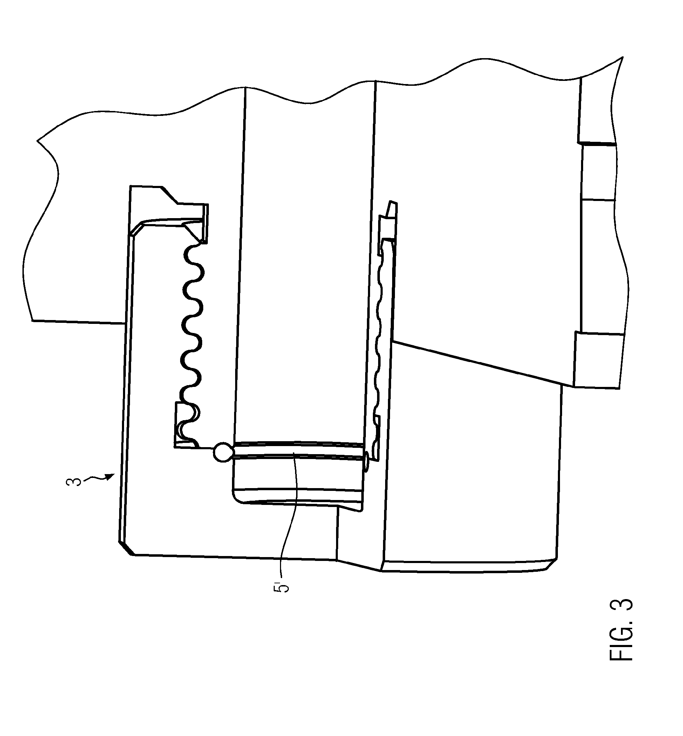

Figur 3 zeigt den Verschluss 3 eines Membranelements 1 von Figur 1 im Detail. Es handelt sich um einen Schraubverschluss 3 mit einer O-Ring-Dichtung 5'. Der Verschluss 3 stellt den Abschluss der Permeatseite dar und bei ihm beginnt die Anreihung der Membranelemente. Dies ist in der Regel technisch bevorzugt, da derartige Anlagen in der Regel permeatseitig nicht überströmt werden. Allerdings ist das nicht notwendig, da eine permeatseitige Überströmung nicht zwingend für Filtrationen ausgeschlossen werden muss. So kann etwa für Reinigungsvorgänge eine Überströmung vorteilhaft sein.

Es versteht sich, dass in den zuvor beschriebenen Ausführungsbeispielen genannte Merkmale nicht auf die genannten speziellen Kombinationen beschränkt sind und auch in beliebigen anderen Kombinationen vorliegen können.

## Patentansprüche

1. Membranmodul, insbesondere für eine Umkehrosmoseanlage oder eine Ultrafiltrationsanlage, das umfasst:
ein erstes Membranelement zum Filtern einer Flüssigkeit; und
ein zweites Membranelement zum Filtern der Flüssigkeit;
wobei das erste Membranelement an einem Ende mit einem Ende des zweiten Membranelements formschlüssig mit einer zwischen den Enden angeordneten Dichtung verbunden ist.

2. Das Membranmodul gemäß Anspruch 1, in dem das erste und das zweite Membranelement über eine Schraubverbindung oder Flanschverbindung, insbesondere entsprechend einer Hygienenorm, miteinander verbunden sind.

3. Das Membranmodul gemäß Anspruch 1 oder 2, in dem die Dichtung eine O-Ring-Dichtung ist oder umfasst.

4. Das Membranmodul gemäß Anspruch 1 oder 2, in dem die Dichtung eine Flachdichtung ist oder umfasst.

5. Das Membranmodul gemäß einem der vorhergehenden Ansprüche, in dem das eine Ende des ersten Membranelements mit dem einen Ende des zweiten Membranelements über ein Verbindungselement verbunden ist.

6. Das Membranmodul gemäß einem der Ansprüche 1 bis 4, in dem das eine Ende des ersten Membranelements und/oder das eine Ende des zweiten Membranelements eine Bohrung zur Überprüfung der Verbindung aufweist.

7. Das Membranmodul gemäß einem der vorhergehenden Ansprüche, weiterhin ein erstes Abzugsrohr in dem ersten Membranelement und ein zweites Abzugsrohr in dem zweiten Membranelement umfassend, wobei das erste und das zweite Abzugsrohr, insbesondere ohne radialen Versatz, aneinander ausgerichtet sind.

8. Membranelement für ein Membranmodul für eine Umkehrosmoseanlage oder Ultrafiltrationsanlage, wobei das Membranelement ein Ende umfasst, das zur formschließenden Verbindung, insbesondere Schraub- oder Flanschverbindung, mit einem anderen Membranelement ausgebildet ist, wobei das Ende insbesondere ein Innengewinde oder ein Außengewinde umfasst.

9. Das Membranelement gemäß Anspruch 8, das weiterhin an einem Ende oder an beiden Enden eine Bohrung zur Überprüfung der Verbindung mit einem anderen Membranelement umfasst.

10. Das Membranelement gemäß Anspruch 8, weiterhin ein Verbindungselement umfassend, das zu einer formschlüssigen Verbindung, insbesondere einer Schraubverbindung, mit einem anderen Membranelement ausgebildet ist.

11. Das Membranelement gemäß Anspruch 10, in dem das Verbindungselement eine Bohrung zur Überprüfung der Verbindung mit einem anderen Membranelement umfasst.

12. Membranelement mit einem schraubbar angebrachten Verschluss und einer zwischen dem Verschluss und einem Ende des Membranelements, an dem der Verschluss schraubbar angebracht ist, vorgesehenen Dichtung.

13. Umkehrosmoseanlage mit einem Membranmodul gemäß einem der Ansprüche 1 bis 7 und/oder einem Membranelement gemäß einem der Ansprüche 8 bis 12.

14. Ultrafiltrationsanlage mit einem Membranmodul gemäß einem der Ansprüche 1 bis 7 und/oder einem Membranelement gemäß einem der Ansprüche 8 bis 13.
